# EUROPEAN PATENT APPLICATION

(11) **EP 4 682 708 A1**
(43) Date of publication of application: **21.01.2026**
(21) Application number: 25173702.9
(22) Date of filing: 30.04.2025
(51) Int. Cl.: G06F 8/38, G06F 9/451

(54) **ADAPTIVE CONTENT MANAGEMENT TO GENERATE INSIGHTS ON THE FLY WITH RICH NATIVE UI EXPERIENCES**

(30) Priority: 28.06.2024 US 202418758928
(71) Applicant: Intuit Inc., Mountain View, CA 94043 (US)
(72) Inventor: SYED, Waseem Akram, Mountain View, 94043 (US)
(74) Representative: D Young & Co LLP

(57) **Abstract**

Certain aspects of the disclosure provide an adaptive content management system configured to generate dynamic user interfaces. In certain aspects, methods for adaptive content management include caching user interface data, including user interface responses to user interaction with the user interface, and other user interface data and providing such cached user interface data to a large language model (LLM) to generate a dynamic user interface screen based on a plurality of key-value pairs indicating user interface objects for display on the dynamic user interface screen.

## Description

### BACKGROUND

### Field

Aspects of the present disclosure relate to adaptive content management of dynamic user interfaces.

### Description of Related Art

User interfaces enable users to interact with computing systems, for example, computers, smart phones, tablets, and other smart devices. Modern user interfaces (UI) enable graphic depicts of the computing system, including, for example, text, colors, icons and graphics, images and videos, moving elements, charts, tables, buttons, and the like. User interface screens are often designed to provide a convenient and intuitive user experience of interacting with the computing system.

Generally, each screen of a user interface, that is, the elements of a user interface displayed together, rely on hard-coded mappings or predefined rules for arranging the elements on the screen. Content may adjust based on user activities and interactions, however, generally such adjustments are limited. For example, content in a table may update as a user inputs text into a field based on a predefined rule. However, such hard-coded mappings and predefined rules limit the user interface screens, and are inflexible.

Moreover, mobile devices, such as smart phones and tablets, often rely on hard-coded mappings and rules to provide a mobile-user friendly experience. Further, mobile user interfaces are often tied to the operating system for the mobile device and designed specifically for one operating system or another. By designing a mobile user interface for a given operative system, the user interface may have native appearance and function. Native appearance and function allows applications and user interfaces to integrate with the mobile device's operating system and provide a consistent user experience. Thus, a technical problem arises in that an application for mobile devices must then be separately built and maintained. Further, a user's experience for the application between different mobile devices may be different.

Another technical problem arises in that updates or changes to an application's user interface need to be sent to mobile devices via, for example, an application marketplace and require users to update the applications to enable the updated user interface.

Accordingly, there is a need for improved user interfaces and user experiences, particularly for mobile devices, that enable dynamic and adaptable user interfaces.

### SUMMARY

Certain aspects provide a method for adaptive content management, comprising: caching a plurality of user interface (UI) responses, wherein each UI response indicates one or more UI objects for native display on a UI and is based on a user interaction with the UI; determining a triggering condition is satisfied based on the plurality of UI responses; in response to determining the triggering condition is satisfied, prompting a large language model (LLM) based on the plurality of UI responses; receiving, from the LLM, an output comprising a plurality of key-value pairs, and a priority level associated with each key-value pair of the plurality of key-value pairs, wherein each key-value pair of the plurality of key-value pairs indicates one of the one or more UI objects; and generating a dynamic UI display based on the output, wherein the UI display comprises key focus areas associated with the one or more UI objects for native display on the UI.

Certain aspects provide a method for adaptive content management, comprising: obtaining a plurality of user interface (UI) objects for native display on a plurality of UI screens; determining a triggering condition is satisfied based on the plurality of UI objects; in response to determining the triggering condition is satisfied, prompting a large language model (LLM) based on the plurality of UI objects; receiving, from the LLM, an output comprising a plurality of key-value pairs, and a priority level associated with each key-value pair of the plurality of key-value pairs, wherein each key-value pair of the plurality of key-value pairs indicates one of the plurality of UI objects; and generating a dynamic UI display based on the output, wherein the UI display comprises key focus areas associated with the plurality of UI objects for native display on the UI.

Other aspects provide processing systems configured to perform the aforementioned methods as well as those described herein; non-transitory, computer-readable media comprising instructions that, when executed by a processors of a processing system, cause the processing system to perform the aforementioned methods as well as those described herein; a computer program product embodied on a computer readable storage medium comprising code for performing the aforementioned methods as well as those further described herein; and a processing system comprising means for performing the aforementioned methods as well as those further described herein.

The following description and the related drawings set forth in detail certain illustrative features of one or more aspects.

### DESCRIPTION OF THE DRAWINGS

The appended figures depict certain aspects and are therefore not to be considered limiting of the scope of this disclosure.
**FIG. 1** depicts an example dynamic user interface system.
**FIG. 2** depicts an example flow for generating dynamic user interfaces with an adaptive content management system.
**FIGS. 3A-3E** depict various example user interfaces generated by the adaptive content management system.
**FIG. 4** depicts an example query and response for an LLM of the adaptive content management system.
**FIG. 5** depicts an example method for adaptive content management.
**FIG. 6** depicts another example method for adaptive concept management.
**FIG. 7** depicts an example processing system with which aspects of the present disclosure can be performed.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Aspects of the present disclosure provide apparatuses, methods, processing systems, and computer-readable mediums for adaptive content management of dynamic user interfaces.

As described above, there are technical challenges to building user interfaces and user experiences, especially for mobile devices. Native user interfaces enable integrated functionality and appearance, thereby improving user experience. However, this requires specialized applications designed for the variety of operating systems for mobile devices. Moreover, such user interfaces are inflexible and rely on predefined rules or hard-coding.

Recently, server-side driven user interfaces (SDUI) have been used to enable rapid updates to user interfaces. A mobile device application configured with SDUI receives user interface elements and data from a server, and the mobile application is configured to utilize such user interface elements and data to render a user interface. The application is configured to use native appearance and functionality to render the elements and data to provide a native user experience.

Generally, SDUI techniques rely on a server to provide the user interface elements and data. The user interface elements and data still rely on rules or hard-coding to be provided to the mobile device for rending. For example, a user interface element for a table of data, and the associated data must be provided to the mobile device for rendering.

While SDUI techniques enable rapid updates, the underlying user interface elements and screens still need to be hard-coded. Thus, a user interface does not have dynamic or new content screens until developed at the server.

Moreover, without the rules and hardcoding, if the server provided a combination of user interface elements and data, such elements may be in conflict or otherwise unable to be on the same screen, for example, due to conflicting locations (e.g., overlapping locations on the screen), presentation (e.g., automatic actions), or functions (e.g., conflicting navigation elements). Even if multiple user interface elements and data may be arranged together, the content is fixed to the element and not adaptable to a new screen. Thus, technical problems exist in which user interface screens are generally static, with hardcoded elements, even using SDUI techniques. Further, new screens need to be manually generated.

Aspects of the present disclosure provide technical solutions to these technical problems, including systems and methods for adaptive content management. In particular, aspects described herein provide for curation of various low level elements and associated data which may be beneficially combined together to form new, dynamic screens with native appearance and function. Further, the low level elements may be beneficially combined together to transform into different objects or portions of the new screens.

For example, in certain aspects, such low level elements may be building blocks used to generate user interface screens and objects. Elements may include labels and content, including properties of the content. The objects may be formed from various elements, for example, an element may be a row of data, and various rows combined to make a list or table. The lists and tables may be combined to generate a section of a user interface screen. Various sections may be combined to make screens. Thus, these individual elements may be beneficially combined to generate a variety of objects, sections, and screens. Moreover, these individual elements may be configured for native presentation and function, even across different operating systems. In particular, the low level elements may be mapped to a screen, for example, elements may be associated with a particular location, object, section or grouped together to form an object, section, or at a location. Thus, a map comprising several elements may be utilized to render a complete screen.

Furthermore, in certain aspects, new dynamic screens may be generated to provide insights or highlight key focus areas of the application. For example, a new screen may highlight a particular area, such as of a given screen, by presenting the content in a different manner, or presenting a selection of the content for additional focus. Thus, beneficially, a dynamic new screen may provide insights into a given area. An insight may provide a deeper, additional, and/or new analysis or understanding regarding the content through presentation on a dynamic new screen. As another example, a new screen may present a selection of content from several screens. This new screen may highlight related content across the different screens, and thus previously harder for a user to consume, by locating the content together on the new screen in a key focus area. Key focus areas may highlight or prominently display important, rapidly changing, or improving data associated with an underlying application. Further, the new screen may transform the content by enveloping the content in a new object, such as a list, table, summary section, etc., to improve usability of the content. Additional insights and key focus areas may then be presented through a summation of content from other screens. Beneficially, deeper analysis and understanding of the data associated with the application may be facilitated through adaptations in presentation of such data, specifically, through dynamic user interface screens.

Moreover, by utilizing a variety of low level elements to generate such dynamic user interface screens, a large number and variety of user interface screens do not need to be hard coded and maintained. Thus, aspects described herein enable user interface screens to be dynamic and adapt content to each user and situation, in an efficient and improved manner.

Further, in certain aspects, a large language model (LLM) may be utilized to curate new screens based on these individual elements. For example, an LLM may be provided with the low level user interface elements and return an output including those elements to be presented together on the new screen. Specifically, in some aspects, the LLM is prompted based on user activity within the application to facilitate generating of a new screen (or screens) summarizing and highlighting visited content, while also enabling new insights and focus areas to be presented. In some aspects, the LLM is additionally or alternatively prompted with content of not-yet-visited screens, such as to enable generation of a new screen summarizing and highlighting new content to be visited, focusing a user and enabling discovery of new content.

Thus, the LLM facilitates curation and generation of new screens, without requiring hard-coding of a large number of predetermined screens. Moreover, the new screens are dynamically generated based on user activity within the application, for example, interaction with particular screens or elements of the user interface, such that the new screen is tailored to the user, and potentially different across a cohort of users. Further, the screen is based on the foundational low level user interface elements, thereby the new screen is also tailored to the application and use case.

### Example System for Adaptive Content Management

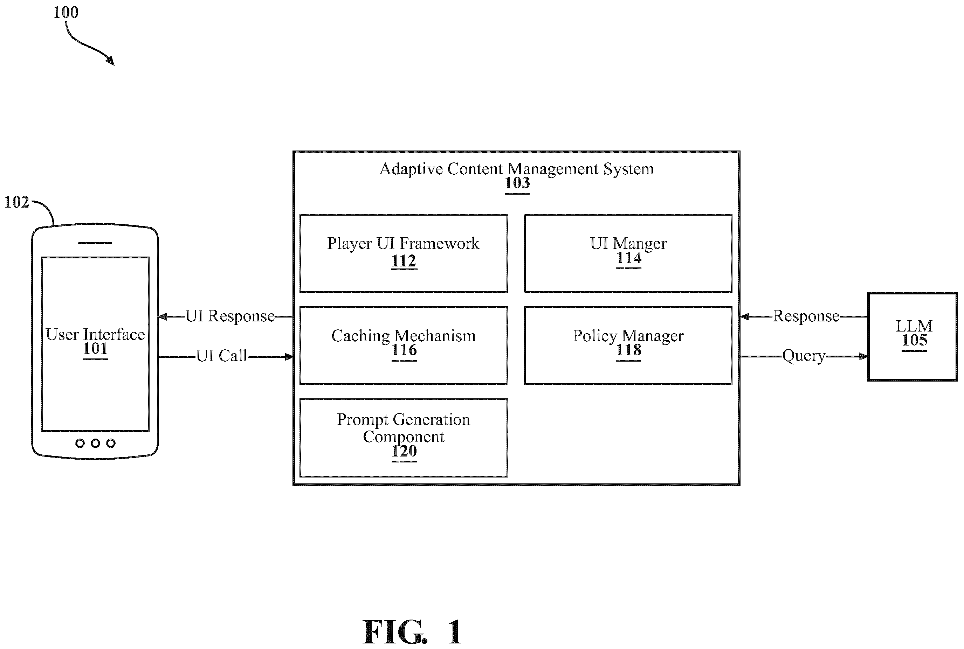

**FIG. 1** depicts an example user interface (UI) system 100 configured to generate insights with rich native user interface using adaptive content management system 103. In particular, system 100 is configured to generate insights for native display on a user interface 101 associated with a user device 102. The user device 102 may be a smart device, such as a smart phone, a tablet, and the like. In particular, the user device 102 may comprise a mobile device with a user interface configured for mobile display. The user device 102 is configured to display content on the user interface 101, for example, content associated with a product, such as an application.

The user device 102 interacts with an adaptive content management system 103 to obtain content for display on the user interface 101. In particular, the user device 102 may make UI calls to the adaptive content management system 103, for example, through an application programming interface (API) and obtain UI responses in return. The UI responses may be utilized by the user device 102 to generate a display on the user interface 101. In particular, the UI responses may be utilized by the user device 102 to generate a native display on the user interface 101. For example, the UI responses may be in a format or otherwise configured to operate natively, such as to integrate with an operating system associated with the user device 102. Accordingly, separate UI systems and data need not be hard coded and generated for each operating system specifically, and the same UI responses may be usable by a variety of operating systems to generate native user interface screens for display on the user interface 101.

The adaptive content management system 103 is configured to generate the UI responses based on the UI calls received from the user device 102. In some embodiments, the adaptive content management system 103 may be, or be part of, a server-side driven UI (SDUI) configured to provide UI data and instructions to a client, in this example, user device 102. The UI responses comprise this UI data and instructions, for example, as UI objects. A UI object may comprise one or more UI elements, such as UI buttons, controls, grids, tables, carousels, boxes, icons, menus, fields, loaders, text, navigators, or the like, which may be utilized to form a UI screen. The UI element may be configured as a key-value pair. In particular, a key-value pair comprises a key and a value associated, or paired, together. The key defines the data indicated by the value. For example, the key may be a name, identifier, label, or property of the data indicated by the value. The value may contain data as plain text in a single or multiple lines, an array, an image, a video, icon, or even another key-value pair. For example, a key may be "customer name" and the value may be "John Smith."

The UI response may be in any domain specific language configured for use by the SDUI, for example, JSON, Fuego Response Format (FrF), or the like. In some embodiments, a UI object may be a JSON object. The user device 102 utilizes the UI response to render a native UI screen, comprising the UI objects and elements. Beneficially, by utilizing the adaptive content management system 103 to provide UI responses, the adaptive content management system 103 may provide consistent and rich, yet native, UI displays for various smart devices, even on smart devices with different operating systems.

Further, the adaptive content management system 103 is configured to interact with a large language model (LLM) 105 to generate dynamic and adaptive UI displays for the UI 101 on the user device 102. In particular, the adaptive content management system 103 queries the LLM 105 based on a prompt of user interaction through the user interface 101 to obtain an insights UI screen for displaying insights and key focus areas. The insight screen may be based on assembled parts of various available UI screens (e.g., UI element building blocks) to highlight such key focus areas and serve insights.

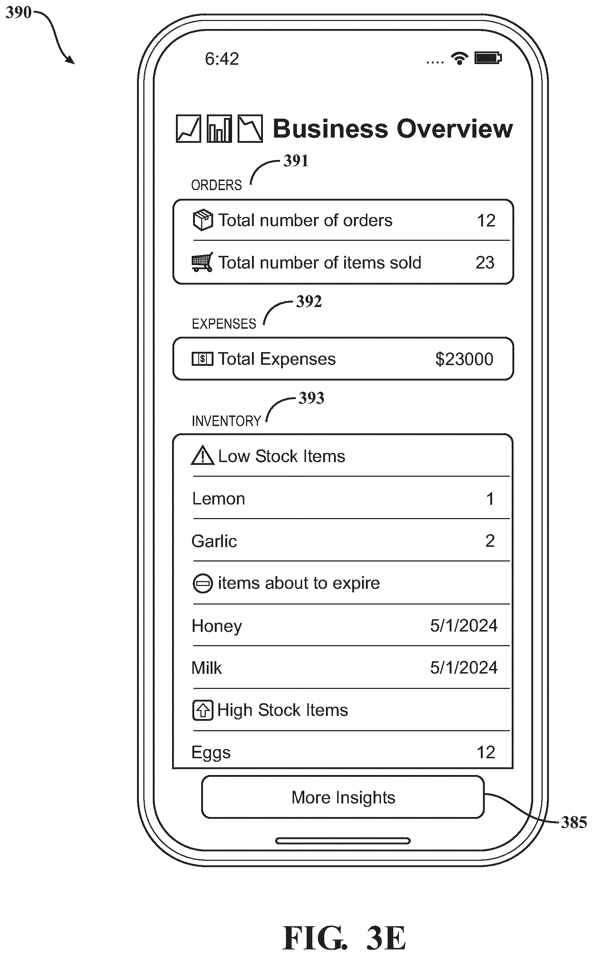

An example insight screen is depicted at **FIG. 3E****.** An insight screen may present content in a manner to facilitate deeper understanding and analysis of the content and underlying data, for example, by combining content from different screens, presenting content in a different form, and the like. Further, an insight screen may highlight key focus areas associated with the application, such as important, rapidly changing, or improving data, by presenting such data in a different manner, such as only a selection of content, or a combination of content. Thus, the insight screen may be dynamically based on the user interaction with the user interface 101, and specific to the type and variety of content of the application.

The adaptive content management system 103 comprises a UI framework 112. The UI framework 112 may comprise part of a SDUI framework, for example, a player UI framework. The UI framework 112 is configured to execute one or more flows, based on JSON payloads, to generate the user experience for display as the UI 101 on the user device 102. A JSON payload may be, for example, one or more key-value pairs, wherein the key is a string and is paired with a value, such as a string, number, array, or object. The UI data may be stored in UI manager 114. Thus, the UI framework 112 may provide the UI responses to the UI 101 for display on the user device 102.

The adaptive content management system 103 further comprises a caching mechanism 116. The caching mechanism 116 is configured to cache, or store, the UI calls and corresponding UI responses between the adaptive content management system 103 and the user device 102. In some embodiments, the caching mechanism 116 is configured to consolidate the cached UI responses.

The adaptive content management system 103 comprises a policy manager 118 configured to manage triggering conditions for prompting the LLM 105. When one or more of the triggering conditions is satisfied, the policy manager 118 is configured to instruct the prompt generation component 120 to query the LLM 105. The triggering conditions managed by the policy manager 118 may comprise one or more conditions associated with the application, user activity with the user interface 101, activity of the adaptive content management system 103, or the like. In some embodiments, a triggering condition may be based on a time of day, a day of the week, a time of year, or the like. In some embodiments, a triggering condition may be based on a user attribute associated with a user of the user device 102. An attribute associated with the user may be, for example, a type of user (e.g., an owner, a verified or paid user, an employee, a consumer, a customer, etc.), such as based on a type of user account or role assigned to a user account. Another example attribute associated with the user may be based on demographic data of the user. In some embodiments, a triggering condition may be based on one or more user activities, such as a user interaction with the user interface 101. For example, a user may interact with a particular UI element, UI screen, etc., on the user interface 101, such as an element associated with insights, to satisfy a triggering condition. As another example, a user interaction may include a navigation pattern associated with the user interacting with the user interface 101. As yet another example, a user interaction may be a user visiting a particular UI screen, frequently visiting a particular UI screen, frequently visiting multiple UI screens, etc. In some embodiments, a triggering condition may be based on a number or size of the UI responses cached by caching mechanism 116, for example, to limit a prompt size for instructing the LLM 105

In some embodiments, a triggering condition may be satisfied when a UI response cached by the caching mechanism 116 fulfils the triggering condition. In some embodiments, a triggering condition may be satisfied by a plurality of UI responses cached by the caching mechanism 116 fulfilling the triggering condition. In some embodiments, a triggering condition may be satisfied when a UI response sent by the adaptive content management system 103 fulfils the triggering condition. In some embodiments, a triggering condition may be satisfied when an attribute of a user interaction fulfils the triggering condition.

Once a triggering condition is satisfied, the prompt generation component 120 is configured to generate a prompt and query the LLM 105 based on the prompt. In some embodiments, the prompt generated by the prompt generation component 120 may comprise one or more of the UI responses cached by caching mechanism 116. In some embodiments, the prompt generated by the prompt generation component 120 may comprise UI data stored in UI manager 114. Further, the prompt may include instructions for the LLM 105, for example, an instruction to generate an output comprising a plurality of key-value pairs, such as a JSON payload, which may be utilized by the user interface 101 to render an insight screen. The instructions may further indicate to the LLM 105 to assign a priority level for each key-value pair of the plurality of key-value pairs. In some embodiments, a key-value pair with a higher priority level may be displayed more prominently, such as higher, on a display of the user interface 101. Similarly, a key-value pair with a lower priority level may be displayed less prominently, such as lower, on the display of the user interface 101. In some embodiments, a key-value pair with a higher priority level may be displayed in a high-touch area of the screen, for example, based on a heat map, while a key-value pair with a lower priority level may be displayed in a low-touch area of the screen.

An LLM is a type of machine learning (ML) model that supports natural language processing tasks. An LLM may be configured to generate text, analyze sentiment, answer prompts (e.g., specific instructions and/or requests) in a conversational manner, translate text from one language to another, summarize content, and/or the like. LLMs make it possible for software to "understand" typical human speech or written content, and respond to it. In some cases, LLMs are also configured to process computer programming languages and generate responses in computer programming languages.

Generative pre-trained transformer (GPT) models are a specific type of LLM based on a transformer architecture (e.g., architecture that uses an encoder-decoder structure and does not rely on recurrence and/or convolutions to generate an output), pre-trained in a generative and unsupervised manner (e.g., it learns from data without being given explicit instructions on what to learn). GPT models analyze prompts and predict the best possible responses based on their understanding of the language.

Pre-training is the initial phase of training for LLMs. Pre-training starts with an untrained model (e.g., a model that has randomly initialized weights), and trains it to predict a next token given a sequence of previous tokens. In the context of LLMs, tokens may be units of text that the models process and generate. Tokens can represent individual characters, words, subwords, or even larger linguistic units, depending on the specific tokenization (e.g., segmentation of text into meaningful units to capture its semantic and syntactic structure) approach used. In some cases, tokens can also represent operators, strings, units, and the like. Tokens act as a bridge between the raw text data and the numerical representations that LLMs are able to work with. Training data used to pre-train an LLM generally includes publicly available "raw text," for example, from books, articles, websites, and/or the like. To be highly capable (e.g., have linguistic and world knowledge), this text may span a broad range of domains, genres, languages, etc. Eventually, training on large amounts of text, the model learns to encode the structure of language in general (e.g., it learns, that "I like," for example may be followed by a noun or a participle) as well as the knowledge included in the raw texts that the model was exposed to during training. For example, an LLM may learn, that the sentence "George Washington was ..." is often followed by "the first president of the United States," and hence has a representation of that piece of knowledge. Training data used to pre-train an LLM may further include code repositories, technical forums, documentation, and the like, enabling the model to learn to encode the structure of the code, as well as the context of the code.

As described herein, the LLM 105 is configured to process a prompt comprising UI data as key-value pairs, for example, in the UI responses, and output UI data for generating a new screen. In particular, the LLM 105 is configured to generate an output based on the prompt, for example, the plurality of key-value pairs and associated priority levels. In some embodiments, the output comprises a curated map of the key-value pairs based on the priority level. For example, each key-value pair may be a JSON payload and in an ordered map for display on the user interface 101 based on a priority level. In some embodiments, a key-value pair with a higher priority level may be displayed more prominently, such as higher, on a display of the user interface 101. The output of the LLM 105 may be sent to the user device 102 for native display on the user interface 101. Beneficially, the output of the LLM 105 may indicate one or more key focus areas of the application, for example, based on the UI responses, or the UI data, to provide a dynamic insight screen on the user interface 101 in native format.

In some embodiments, the adaptive content management system 103 is configured to provide the output to the user device 102 to generate the insight screen on the user interface 101. In some embodiments, a user may be prompted on the user interface 101 to navigate to the insight screen, for example, based on a UI element indicating to the user an insight screen is available.

### Example Flow Diagram for Dynamic UI Generation

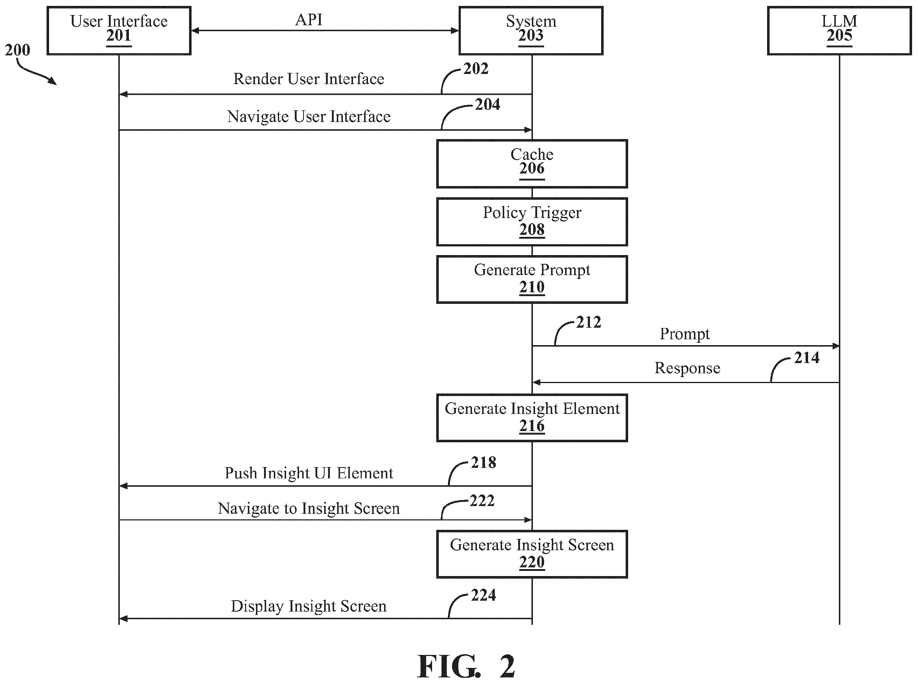

**FIG. 2** depicts an example flow 200 for generating dynamic UI screens based on an LLM. Flow 200 depicts interactions and steps which may be performed by aspects of the user interface (UI) system 100, as described with respect to **FIG. 1**, to enable user interaction via a UI 201 with an application. In this example, the UI 201 may be an example of the UI 101 displayed on user device 102. System 203 may be an example of the adaptive content management system 103 and a LLM 205 may be an example of the LLM 105. The UI 201 may interface with the system 203 via an API.

Initially, at step 202, the UI 201 calls the system 203 to obtain data for rendering UI screens on the UI 201. At step 204, the system 203 sends a UI response to the UI 201, including UI data to be used by the UI 201 to generate a native display on the UI 201. At step 206, the system 203 caches the UI response to the UI 201. In some embodiments, steps 202-206 may be repeated as a user navigates the UI 201, for example, to interact with different aspects of the application. As described with respect to **FIG. 1**, the UI 201 and the system 203 may comprise a SDUI to provide information for rendering a UI from the system 203 for display on the UI 201. Each screen of the UI 201 may be an enriched native display of the application by representing JSON objects comprising application content and data. Beneficially, each user interface screen does not need to be hard coded into the application and the UI 201 is configured to render the display based on the UI responses provided by the system 203. In some embodiments, the UI responses are cached by the system 203, for utilization in a prompt for the LLM to generate the insight screen. In some embodiments, caching the UI responses includes consolidating the UI responses to reduce the prompt size.

At step 208, a triggering condition is satisfied. A triggering condition comprises a condition, which, when satisfied, triggers the system 103 to proceed to step 210 with generating a prompt. A triggering condition may be associated with the application, for example, based on attributes or activities of the application, attributes or activities of users of the application, and the like. For example, a triggering condition may be a navigation pattern within the UI responses. As yet another example, a triggering condition may be a user attribute associated with the user interaction. In another example, a triggering condition may be a time of day. In yet another example, a triggering condition may be an indication the user visited a plurality of frequently visited screens.

A triggering condition may further be associated with the LLM 205, for example, a triggering condition may be a threshold number of tokens to comprise a prompt for the LLM 205. An LLM is configured to ingest the data in the prompt for generating a response. However, LLMs have a limit to the amount of data that may be ingested, for example, based on a context window of the LLM. Data beyond the limit may either not be used by the LLM in responding, or may render the LLM unable to response. The number of tokens corresponds to the amount of data the LLM can ingest. Thus, a threshold number of tokens may be a maximum, or approximate maximum amount of data for the LLM. In some embodiments, a threshold number of tokens is based on the UI responses cached at step 206, for example, the number of cached UI responses, the size of the cached UI responses, etc. In some embodiments, a prompt generation component, such as prompt generation component 120 in **FIG. 1**, determines when a threshold number of tokens for the prompt has been reached. Beneficially, then, a prompt generated for the LLM may be within a prompt size constraint of the LLM, even when another triggering condition has not yet been satisfied. In some embodiments, a prompt may be triggered based satisfaction of one or more triggering condition.

At step 210, a prompt is generated based on satisfaction of a triggering condition at step 208. In some embodiments, the prompt may be generated based on one or more of the UI responses cached at step 206. In some embodiments, the prompt may be generated based on one or more UI objects associated with one or more additional UI screens, for example, an unvisited screen of the application. The prompt may further comprise an instruction to the LLM 205 to generate an output comprising a plurality of key-value pairs, and a priority level associated with each key-value pair of the plurality of key-value pairs.

For example, the output may comprise a plurality of UI objects and associated properties, such as in a plurality of key-value pairs. Further, each key-value pair may be assigned a priority level. A priority level, in some embodiments, may be based on a property of the UI object. In some embodiments, the priority level may be associated with a heat map associated with the UI 201, for example, a higher priority may be associated with a high-touch area of the UI 201. The heat map may indicate high-touch or low-touch areas of the UI 201. In some embodiments, the output may comprise a curated map of the plurality of UI objects based on priority level, for example, ordered from higher to lower priority, for display on an insight screen.

Further, in some embodiments, the output may comprise additional UI objects generated based on a combination of UI elements, such as low-level UI elements (e.g., building block UI elements), including labels, text fields, buttons, etc. The LLM 205 may be prompted to generate an insights based on one or more low-level UI elements to generate a UI object, such as a JSON payload for the user device to display. The LLM 205 may generate a response comprising additional UI objects based on a combination of UI elements. For example:

```
 {
 {
      elementType: UILabel
      elementValue: "Here are the insights about your business summary"
 }
 {
      elementType: Button
      elementValue: "More Insights"
      elementAction: "Generate More Insights"
 }
 }
```

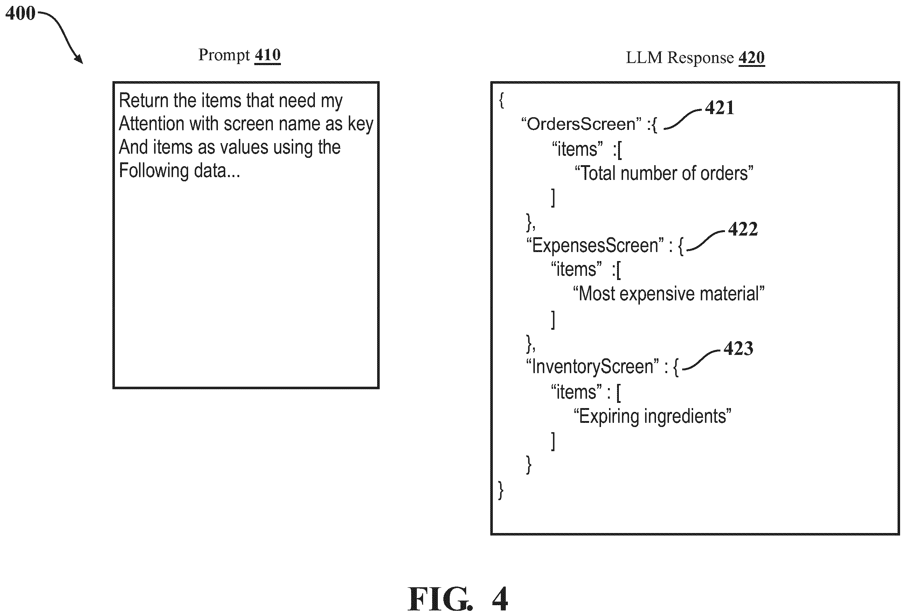

At step 212, the LLM 205 is provided with the prompt. At step 214, the LLM 205 generates an output based on the prompt. **FIG. 4** depicts an example prompt, prompt 410 and an example output generated by the LLM, LLM response 420.

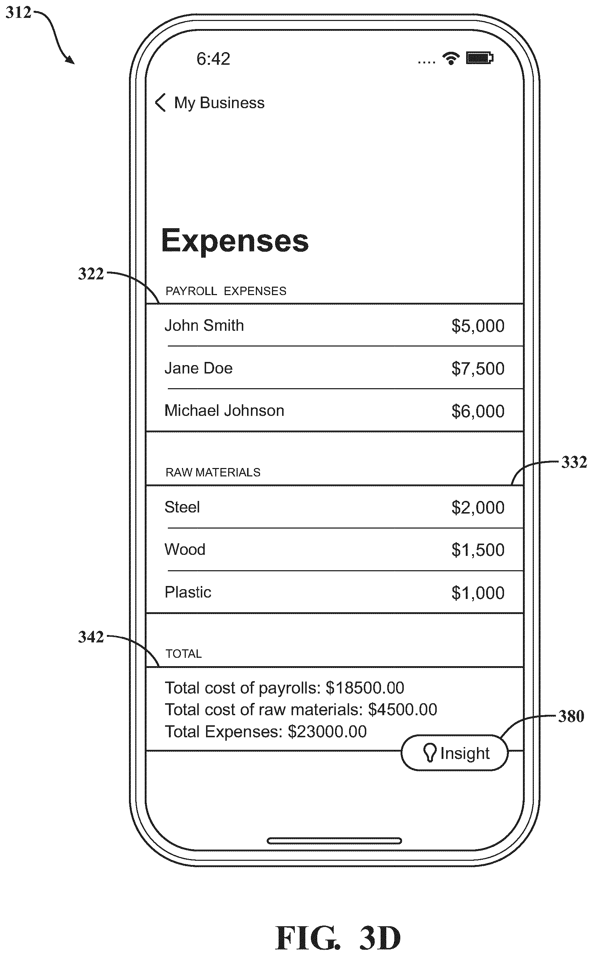

At step 216, the system 203 generates an insight element based on receiving the output from the LLM 205. For example, the insight element may comprise a notification of an available insight screen, a nudge to provide a visual cue to encourage the user to navigate to the insight screen, an additional UI element, or the like, for display on the UI 201, which may nudge or otherwise prompt the user to navigate to an insight screen. An example additional UI element, an insight element is depicted in **FIG. 3D** to assist the user in navigating to the insight screen.

At step 218, the system 203 provides the insight element to UI 201 for display. In some embodiments, the insight element is provided to the UI 201 through a stream or open connection, to enable microservices communications between the UI 201 and the system 203, for example, using a protocol based on rSocket, HTTP/2, gRPC, etc.

At step 220, the system 203 generates the insight screen based on the output of the LLM 205. Based on the output of the LLM 205 provided at step 214, the system 203 generates the insight screen for rendering by the UI 201. The system 203 may convert the output of the LLM 205 to facilitate presentation of the insights screen. For example, the system 203 may convert a screen name of an existing screen to a section name for the insight screen to facilitate efficient categorization. An insight section associated with an orders screen, for example, may be converted to an orders section of the insight screen for display by the UI 201. In some embodiments, the system 203 generates the insight screen at approximately the same time as providing the insight element at step 218.

Once a user navigates to the insight element on the UI 201, at step 222, the UI 201 requests an insight screen for display. At step 224, the system 203 sends the insight screen to the UI 201 for display. In some embodiments, the insight screen may further comprise an additional insight element, for example, based on additional screens associated with the application or focusing on one of the portions of the insight screen. For example, the system 203 may prompt the LLM 205 to generate additional insights. In some embodiments, steps 210-224 may be repeated to generate an additional insights screen and display the insights screen to the user. The LLM 205 may be prompted, in part, by the insights screen, for example, based on the output of the LLM 205 provided at step 214. In some embodiments, the LLM 205 is prompted, additionally or alternatively, based on additional UI data, including low-level UI elements, unvisited screens, and the like. Thus, the additional insights may be based on the previously generated insights, and additional content.

Flow 200 achieves many technical benefits. For example, by dynamically generating the insight screen based on UI elements from various other screens (e.g., cached UI responses or unvisited screens), the resulting insight screen is an amalgamation of content from various, and different screens. Moreover, the insight screen serves insights and key focus areas of the content by (1) presenting various content together; and (2) presenting content in a new manner. By presenting various content together, for example, from different screens, or providing content on not-yet-visited screens, greater insight, understanding, and analysis of the content, underlying data, and status of the application may be presented. For example, in a social network application, insights may be derived relating to key focus areas such as activity, user-interactions, monetarization, posts, messages, advertising, etc., through an insight screen presenting content from various key focus areas together. Further, in some embodiments, the content may be presented in a new manner. For example, data previously presented in a table may be presented in a list, as a standalone tally, a summarization, and the like, to highlight focus areas. In an example ecommerce application, data relating to total expenses and low inventory may be presented together, such as in one table, in a list, or otherwise in proximity, to enable consumption of data related to both key focus areas. Further, a shipping data table may highlight delayed orders in an informational element, such as a pop-up, to drive insights into delayed shipments.

Moreover, the resulting insight screen is a dynamic and adaptable screen in a native display. Specifically, the user experience is improved through generation of a new, dynamic insight screen (e.g., not hard-coded) with enriched native display of the various sections, elements, and content. For example, the LLM 205 outputs a plurality of key-value pairs indicating the content for display, such that each user interface 201 may utilize the output to generate a native insight screen. Specifically, in some embodiments, the output may be in a format usable by a variety of user devices to display content natively, even on different operating systems. For example, each insight screen has native functionality, even on different operating systems, while being based on the output of the LLM 205. Thus, one LLM may be utilized for a variety of devices, while still generating native displays, and multiple LLMs need not be trained and maintained. Further, although each insight screen is unique in terms of content and display, the user experience may be consistent because the format of the UI objects (e.g., as JSON objects) is consistent.

Furthermore, although the insight screen 390 of this example is associated with an example application, the adaptive UI system may be utilized in many use-cases because the adaptive UI system and dynamic insight screens are based on the user activity with the UI. Thus, the adaptive UI system provides a robust mechanism for displaying insights.

Note that **FIG. 2** is just one example of a flow, and other flows including fewer, additional, or alternative steps are consistent with this disclosure.

### Example Dynamic User Interface

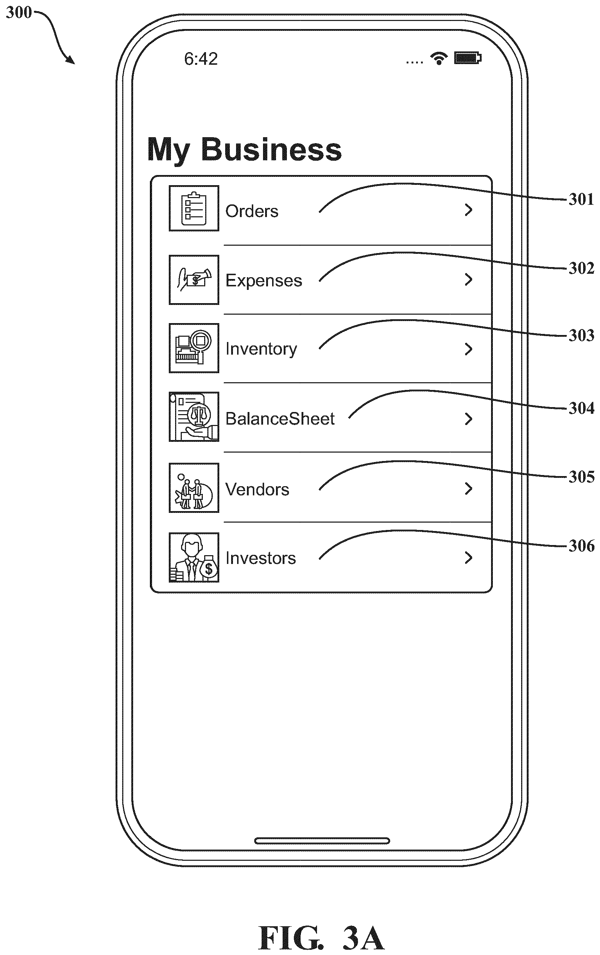

**FIGS. 3A-3E** depict various example dynamic UI screens for display, such as the UI 201 of **FIG. 2B**, and the UI 101 of **FIG. 1**, on a user device. The example dynamic UI screens of **FIGS. 3A-3E** may be associated with an application run on the user device, for example, an application to assist small business management. The application and associated example dynamic UI screens of **FIGS. 3A-3E** may be just one example of an application utilizing dynamic UI screens according to aspects of the present disclosure, and other examples and use-cases are contemplated herein, for example, a social network application, a software as a service application, an ecommerce application, a financial application, and the like.

**FIG. 3A**, in particular, depicts an example summary screen 300 for the application. The summary screen 300 includes a list of six UI elements, including an orders element 301, an expenses element 302, an inventory element 303, a balance sheet element 304, a vendors element 305, and an investors element 306. A user may interact with the summary screen 300, for example, by selecting one of the UI elements. As described with respect to **FIG. 2**, when a user interacts with the UI, the UI calls the system to provide the information needed for display, such as through an API. The system returns UI data that the UI uses to build native display screens.

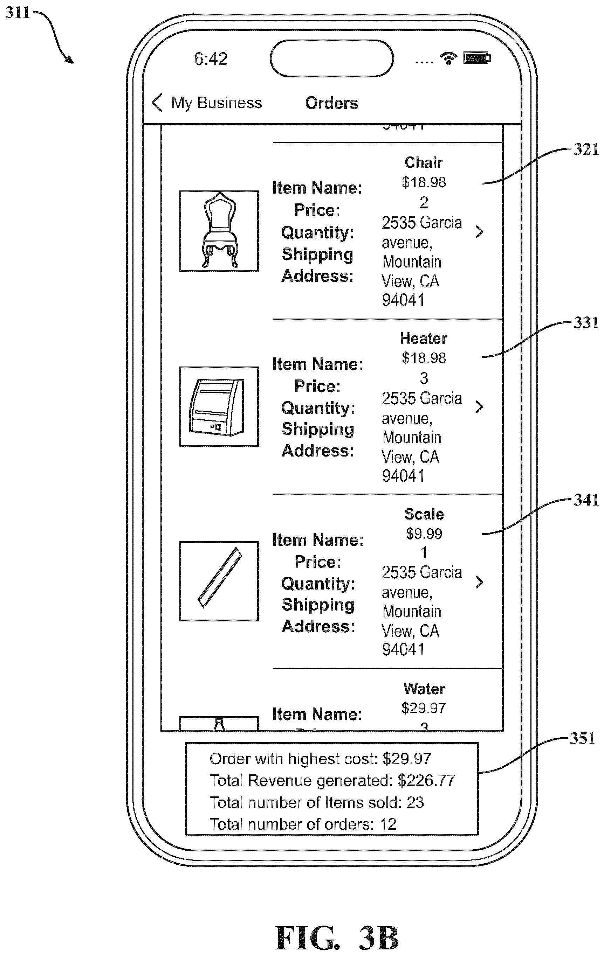

For example, a user may interact with the summary screen 300 by selecting the orders element 301. The UI calls to the system and receives UI data in return. The UI then utilizes the received UI data to display an orders screen, such as example screen 311 in **FIG. 3B****.** The orders screen 311 displays a list of various orders and order information through a variety of UI elements, for example, first order element 321, second order element 331, and third order element 341. The order screen 311 further includes a summary table element 351 summarizing the order.

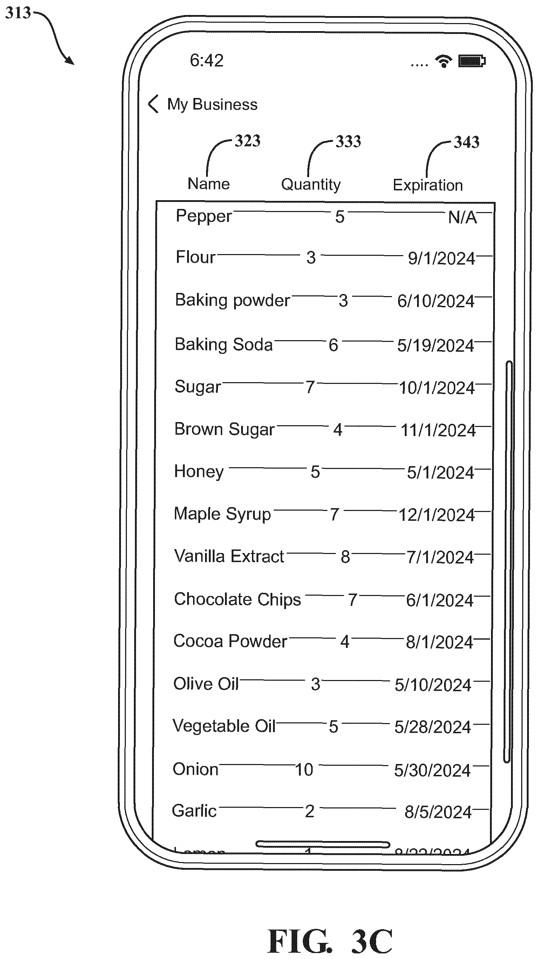

As another example, a user may interact with the summary screen 300 by selecting the inventory element 303, and the user device displays an inventory screen, such as example screen 313 in **FIG. 3C****.** The inventory screen 313 displays a table UI element, in this example, of inventory data, including a name section 323, a quantity section 333, and an expiration section 343.

As another example, a user may interact with the summary screen 300 by selecting the expenses element 302 and the user device may display an expenses screen 312 in **FIG. 3D****.** The expenses screen 312 may include sections, for example, a payroll expenses section 322, and a raw materials section 332. The expenses screen 312 may further include a total expenses element 342.

Similarly, a user may interact with other elements of the summary screen 300, for example, selecting the balance sheet element 304, the vendors element 305, or the investors element 306, and be directed to a corresponding screen based on the various UI responses received.

As described in **FIG. 2**, the system may prompt an LLM, such as LLM 205, to generate an insight screen, depicting various insights and key focus areas, for the user device. In particular, the system provides an output comprising UI data for display, in particular, a plurality of key-value pairs representing various UI objects, and a priority level associated with each key-value pair. The ordering and priority levels of each key-value pair may indicate a mapping, or a location of the UI objects on the insight screen. The content displayed by the UI objects depict insights and key focus areas of the application.

**FIG. 4** depicts an example prompt and response from an LLM. An example prompt 410 comprises a prompt for the LLM. In this example, the prompt 410 includes an instruction to the LLM, to return items for attention in a key-value pair based on cached data. In some examples, the prompt 410 may be based on additional screens or application data.

An example LLM response 420 to the prompt 410 is also depicted. The LLM response 420 includes three key-value pairs, 421, 422, and 423. The first key-value pair 421 comprises a screen name, "Orders Screen" corresponding to the orders screen 311 in **FIG. 3B**, and an item for display "Total number of orders" associated with the screen name. Thus, the LLM response 420 indicates a key focus area of the orders screen. The second key-value pair 422 comprises a screen name, "Expenses Screen" corresponding to the expenses screen 312 in **FIG. 3D**, and items for display "Most expensive material" associated with the expenses screen. The third key-value pair 423 comprises a screen name, "Inventory Screen" corresponding to the inventory screen 313 in **FIG. 3C**, and items for display "Expiring ingredients" associated with the inventory screen. These key-value pairs may each indicate a UI object for display on an insight screen.

In the LLM response 420, the priority level is indicated by the ordering of the key-value pairs with the highest priority listed first, next highest priority listed second, and lowest priority listed last. In some embodiments, a key-value pair with a higher priority level may be displayed more prominently, such as higher, on the insight screen, while a key-value pair with a lower priority level may be displayed less prominently, such as lower, the insight screen. In some embodiments, a key-value pair with a higher priority level may be displayed in a high-touch area of the insight screen, for example, based on a heat map, while a key-value pair with a lower priority level may be displayed in a low-touch area of the insight screen.

The UI objects may include objects, and individual UI elements, such as sections, data, icons, tables, etc. from one or more of the previously visited screens, in this example, items on the orders screen 311 in **FIG. 3B**, items on the inventory screen 313 in **FIG. 3C**, and items on the expenses screen 312 in **FIG. 3D****.** In some embodiments, the UI objects may additional, or alternatively, include objects and individual UI elements from available, but not visited UI screens, such as a balance sheet screen, a vendors screen, or an investors screen. The mapping may further include a consolidation or conversion of the UI objects, to generate a cohesive native screen. The mapping is then used by the UI to generate an insight screen for display.

When an insight screen is available for the application, the system may prompt the user to navigate to said screen. Specifically, as described in **FIG. 2**, the system may send an insights UI element to the user device for display. In the example expenses screen 312 in **FIG. 3D**, the user device displays the insights UI element as element 380. In this example, the insights UI element 380 appears as a selectable pill, a small button style component to navigate the user to the insight screen. In some embodiments, the insights UI element may be any suitable UI element, for example, a banner, a notification bar, a pop-up, or the like. Further, the insight UI element may be provided on any suitable screen of the application, and may be provided whenever an insight screen is available. Beneficially, the insights UI element is integrated into the native UI utilized by the application, such as to provide the user with a consistent user experience.

When the user navigates to the insights UI element 380 in **FIG. 3D**, an insight screen 390 in **FIG. 3E** may be displayed. In particular, and as described in **FIG. 2**, the UI calls the system for an insight screen. The system provides the mapping of the UI objects for the user device to generate the insight screen 390 in **FIG. 3E****.** The mapping is based on the LLM response, e.g., LLM response 420 in **FIG. 4**, indicating insights and key focus areas of UI screens, as well as a priority ordering.

In the example insight screen 390, the key focus areas and insights include an orders section 391, an expenses section 392, and an inventory section 393. The UI object associated with the orders section 391 may have a higher priority level in the mapping, as it is displayed at the top of the insight screen 390. The UI object associated with the inventory section 393 may have a lower priority level in the mapping, as it is displayed at the bottom of the insight screen 390. The UI object associated with the expenses may have a priority level in between the UI object associated with the orders section 391 and the UI object associated with the inventory section 393, as it is displayed below the orders section 391 and above the inventory section 393.

In particular, the orders section 391 includes elements of the orders screen 311 which may be elements containing relevant or important data, in this example, orders summary information regarding a total number of orders and a total number of items sold. The expenses section 392 includes an element of the expenses screen 312, in this example, expenses summary information regarding total expenses. The inventory section 393 includes a table of elements of the inventory screen 313, particularly, low stock item, items about to expire, and high stock items. Thus, the insight screen 390 provides key focus areas from various other screens, as well as an insightful combination of key focus areas.

The insight screen 390 further includes an additional insights element 385. The additional insights element 385 may navigate the user to an additional insight screen displaying additional insights and key focus areas, or focusing of one or more of the insights depicted on the insight screen 390.

Many benefits may thus be derived. For example, the insight screen 390 allows for portions of other screens to be highlighted. Further, the insight screen 390 allows for a combination of portions from many other screens to be highlighted together. In some aspects, an individual portion may depict a key focus area and provide insight. In some aspects, a combination of portions may together depict part of a key focus area and together provide insight. Additionally, the insight screen 390 provides an improved user experience by providing a combination of portions on a single screen, thereby enabling improved display and reducing user navigation between various other screens.

Moreover, the insight screen 390 provides a dynamic and adaptable screen in a native display. Specifically, the user experience is improved through generation of a new, dynamic insight screen (e.g., not hard-coded) with enriched native display of the various sections, elements, and content. For example, in the insight screen 390, no element is displayed exactly the same as in a previous screen, e.g., the orders section 391 is a distillation of the orders screen 311, presented in a table element, different from the table elements displayed in the orders screen 311, but with a consistent user experience. Further, because the insight screen 390 is dynamic and adaptive, the insight screen is tailored to the user activity. For example, the insight screen 390 is based on an LLM determining relevant UI objects for display. Additionally, the insight screen does not need to be one of many hardcoded screens, designed to each accommodate a different scenario based on specific actions. Rather, by utilizing the LLM to generate the mapping, the insight screen may accommodate many scenarios.

Furthermore, although the insight screen 390 of this example is associated with an example application, the adaptive UI system may be utilized in many use-cases because the adaptive UI system and dynamic insight screens are based on the user activity with the UI. For example, the adaptive UI system may be utilized in a social network application. In such a use-case, insights may relate to activity, user-interactions, monetarization, posts, messages, advertising, and the like. As another example, the adaptive UI system may be utilized in an ecommerce application. In such a use-case, insights may relate to products, inventory, sales, shipping, services, expenses, and the like. In yet another example, the adaptive UI system may be utilized in a software as a service (Saas) application, where insights may relate to aspects of the application, including management tools, user productivity, new features, and the like. Thus, the adaptive UI system provides a robust mechanism for displaying insights.

### Example Method for Adaptive Content Management

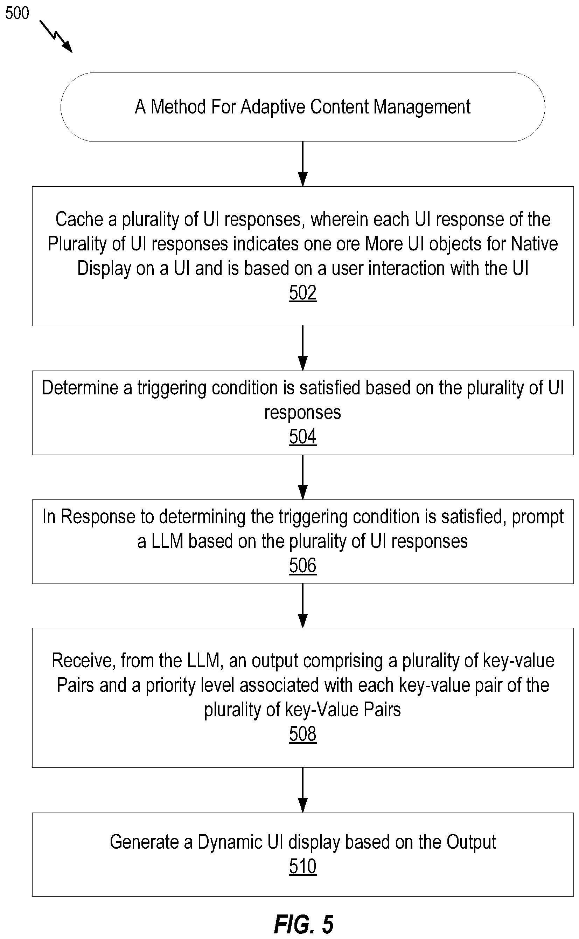

**FIG. 5** depicts an example method 500 for adaptive content management, such as with adaptive content management system 103 in **FIG. 1**, or system 203 in **FIG. 2****.**

Method 500 begins at step 502 with caching a plurality of user interface (UI) responses, wherein each UI response indicates one or more UI objects for native display on a UI and is based on a user interaction with the UI, for example, as described with respect to steps 202-206 of **FIG. 2****.** Further, a user interaction with a UI is depicted in **FIGS. 3A**, **3B**, **3C**, and **3D**.

Method 500 proceeds to step 504 with determining a triggering condition is satisfied based on the plurality of UI responses, for example, as described with respect to step 208 of **FIG. 2****.**

In some embodiments, the triggering condition comprises a threshold number of tokens to comprise a prompt for the LLM. Thus, beneficially, the prompt for the LLM may be limited to a size usable by the LLM, even when other triggering conditions are not yet satisfied.

In some embodiments, the triggering condition comprises a navigation pattern within the UI responses. Beneficially, then, in some embodiments, the prompt generated at step 506, may further include additional unvisited screens, such that the system may proactively generate the insight screen. In some embodiments, the triggering condition comprises a user attribute associated with the user interaction. In some embodiments, the triggering condition comprises a time of day. In some embodiments, the triggering condition comprises an indication the user visited a plurality of frequently visited screens.

In response to determining the triggering condition is satisfied, method 500 then proceeds to step 506 with prompting a large language model (LLM) based on the plurality of UI responses, for example, as described with respect to step 208 of **FIG. 2****.**

In some embodiments, prompting the LLM based on the plurality of UI responses, further comprises instructing the LLM to generate the output.

In some embodiments, prompting the LLM based on the plurality of UI responses, further comprises a plurality of UI objects associated with one or more additional UI screens.

Method 500 then proceeds to step 508 with receiving, from the LLM, an output comprising a plurality of key-value pairs, and a priority level associated with each key-value pair of the plurality of key-value pairs, for example, as described with respect to step 214 of **FIG. 2**, wherein each key-value pair of the plurality of key-value pairs indicates one of the one or more UI objects.

In some embodiments, the output comprises a curated map of the key-value pairs based on the priority level.

In some embodiments, the priority level is based on a property of one or more UI objects for native display on the UI. In some embodiments, the priority level is based on a heat map associated with the UI display.

Method 500 proceeds to step 510 with generating a dynamic UI display, for example insight screen 390 in **FIG. 3E**, based on the output, for example, as described with respect to step 220 of **FIG. 2**, wherein the UI display comprises key focus areas associated with the one or more UI objects for native display on the UI. Beneficially, the dynamic UI display serves insights and key focus areas of the content by (1) presenting various content together; and (2) presenting content in a new manner. By presenting various content together, for example, from different screens, or providing content on not-yet-visited screens, greater insight, understanding, and analysis of the content, underlying data, and status of the application may be derived.

In some embodiments, method 500 further comprises prompting a user based on receiving the output from the LLM, for example, as described with respect to step 218 of **FIG. 2****.**

In some embodiments, method 500 further comprises receiving, from the user, a request for the UI display after the prompting of the user, for example, as described with respect to step 220 of **FIG. 2**; and providing, to the UI, the UI display for presentation to the user, for example, as described with respect to step 224 of **FIG. 2****.**

Note that **FIG. 5** is just one example of a method, and other methods including fewer, additional, or alternative steps are consistent with this disclosure.

### Another Example Method for Adaptive Content Management

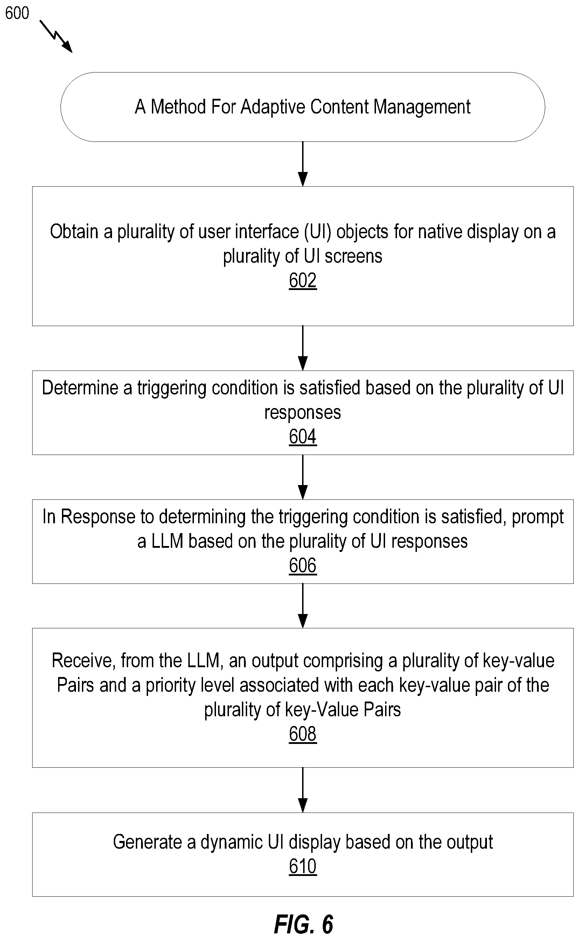

**FIG. 6** depicts another example method 600 for adaptive content management, such as with adaptive content management system 103 in **FIG. 1**, or system 203 in **FIG. 2**.

Initially, method 600 begins at step 602 with obtaining a plurality of user interface (UI) objects for native display on a plurality of UI screens, for example, stored with UI manager 114 in **FIG. 1****.** Further, a user interaction with a UI is depicted in **FIGS. 3A**, **3B**, **3C**, and **3D**. Beneficially, the dynamic UI display may include unvisited screens, such that the system may proactively generate the insight screen. In some embodiments, the dynamic UI display also includes content from visited screens.

Method 600 proceeds to step 604 with determining a triggering condition is satisfied based on the plurality of UI responses, for example, as described with respect to step 208 of **FIG. 2****.**

In some embodiments, the triggering condition comprises a threshold number of tokens to comprise a prompt for the LLM. In some embodiments, the triggering condition comprises a navigation pattern within the UI responses. In some embodiments, the triggering condition comprises a user attribute associated with the user interaction. In some embodiments, the triggering condition comprises a time of day. In some embodiments, the triggering condition comprises an indication the user visited a plurality of frequently visited screens.

In response to determining the triggering condition is satisfied, method 600 then proceeds to step 606 with prompting a large language model (LLM) based on the plurality of UI responses, for example, as described with respect to step 208 of **FIG. 2****.**

In some embodiments, prompting the LLM based on the plurality of UI responses, further comprises instructing the LLM to generate the output.

In some embodiments, prompting the LLM based on the plurality of UI responses, further comprises a plurality of UI objects associated with one or more additional UI screens.

Method 600 then proceeds to step 608 with receiving, from the LLM, an output comprising a plurality of key-value pairs, and a priority level associated with each key-value pair of the plurality of key-value pairs, for example, as described with respect to step 214 of **FIG. 2**, wherein each key-value pair of the plurality of key-value pairs indicates one of the one or more UI objects.

In some embodiments, the output comprises a curated map of the key-value pairs based on the priority level.

In some embodiments, the priority level is based on a property of one or more UI objects for native display on the UI. In some embodiments, the priority level is based on a heat map associated with the UI display.

In some embodiments, method 600 further comprises prompting a user based on receiving the output from the LLM, for example, as described with respect to step 218 of **FIG. 2****.**

In some embodiments, method 600 further comprises receiving, from the user, a request for the UI display after the prompting of the user, for example, as described with respect to step 220 of **FIG. 2**; and providing, to the UI, the UI display for presentation to the user, for example, as described with respect to step 224 of **FIG. 2****.**

Method 600 proceeds to step 610 with generating a dynamic UI display, for example insight screen 390 in **FIG. 3E**, based on the output, for example, as described with respect to step 220 of **FIG. 2**, wherein the UI display comprises key focus areas associated with the one or more UI objects for native display on the UI. Beneficially, the dynamic UI display is an adaptable screen in a native display. Specifically, the user experience is improved through generation of a new, dynamic insight screen (e.g., not hard-coded) with enriched native display of the various sections, elements, and content. Further, the dynamic UI display services insights and key focus areas of content through new, altered, and/or combined presentation of content. Thus, greater insight, understanding, and analysis of the content, underlying data, and status of the application may be derived based on the dynamic UI display.

Note that **FIG. 6** is just one example of a method, and other methods including fewer, additional, or alternative steps are consistent with this disclosure.

### Example Processing System for Adaptive Content Management

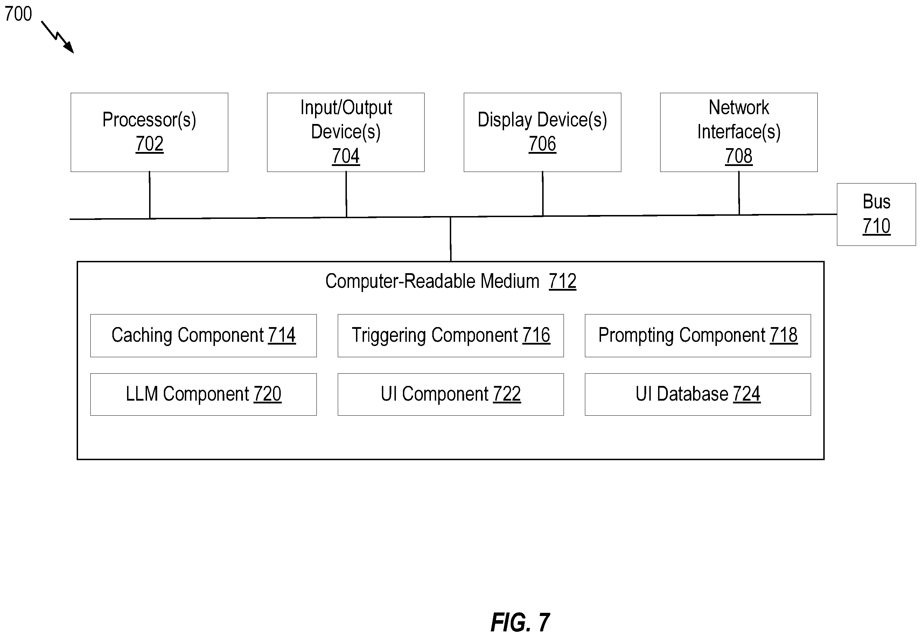

**FIG. 7** depicts an example processing system 700 configured to perform various aspects described herein, including, for example, flow 200 as described above with respect to **FIG. 2**, method 500 as described above with respect to **FIG. 5**, or method 600 as described with respect to **FIG. 6**.

Processing system 700 is generally be an example of an electronic device configured to execute computer-executable instructions, such as those derived from compiled computer code, including without limitation personal computers, tablet computers, servers, smart phones, smart devices, wearable devices, augmented and/or virtual reality devices, and others.

In the depicted example, processing system 700 includes one or more processors 702, one or more input/output devices 704, one or more display devices 706, one or more network interfaces 708 through which processing system 700 is connected to one or more networks (e.g., a local network, an intranet, the Internet, or any other group of processing systems communicatively connected to each other), and computer-readable medium 712. In the depicted example, the aforementioned components are coupled by a bus 710, which may generally be configured for data exchange amongst the components. Bus 710 may be representative of multiple buses, while only one is depicted for simplicity.

Processor(s) 702 are generally configured to retrieve and execute instructions stored in one or more memories, including local memories like computer-readable medium 712, as well as remote memories and data stores. Similarly, processor(s) 702 are configured to store application data residing in local memories like the computer-readable medium 712, as well as remote memories and data stores. More generally, bus 710 is configured to transmit programming instructions and application data among the processor(s) 702, display device(s) 706, network interface(s) 708, and/or computer-readable medium 712. In certain embodiments, processor(s) 702 are representative of a one or more central processing units (CPUs), graphics processing unit (GPUs), tensor processing unit (TPUs), accelerators, and other processing devices.

Input/output device(s) 704 may include any device, mechanism, system, interactive display, and/or various other hardware and software components for communicating information between processing system 700 and a user of processing system 700. For example, input/output device(s) 704 may include input hardware, such as a keyboard, touch screen, button, microphone, speaker, and/or other device for receiving inputs from the user and sending outputs to the user.

Display device(s) 706 may generally include any sort of device configured to display data, information, graphics, user interface elements, and the like to a user. For example, display device(s) 706 may include internal and external displays such as an internal display of a tablet computer or an external display for a server computer or a projector. Display device(s) 706 may further include displays for devices, such as augmented, virtual, and/or extended reality devices. In various embodiments, display device(s) 706 may be configured to display a graphical user interface.

Network interface(s) 708 provide processing system 700 with access to external networks and thereby to external processing systems. Network interface(s) 708 can generally be any hardware and/or software capable of transmitting and/or receiving data via a wired or wireless network connection. Accordingly, network interface(s) 708 can include a communication transceiver for sending and/or receiving any wired and/or wireless communication.

Computer-readable medium 712 may be a volatile memory, such as a random access memory (RAM), or a nonvolatile memory, such as nonvolatile random access memory (NVRAM), or the like. In this example, computer-readable medium 712 includes a caching component 714, a triggering component 716, a prompting component 718, an LLM component 720, an UI component 722, and a UI database 724.

In certain embodiments, the caching component 714 is configured to cache user interface responses sent by an adaptive content management system to a user device. In some embodiments, the caching component 714 is further configured to consolidate the user interface responses when cached. Caching is described with respect to step 206 of **FIG. 2****.**

In certain embodiments, the triggering component 716 is configured to determine when a triggering condition is satisfied, for example, as described with respect to step 208 of **FIG. 2****.**

In certain embodiments, the prompting component 718 is configured to interact with the LLM component 720, for example, by prompting the LLM component 720, and receiving responses generated by the LLM component 720, such as described with respect to steps 210-214 in **FIG. 2****.**

In certain embodiments, the UI component 722 is configured to interface, such as through an API, with user devices to generate and send user interface responses for display by the user device. For example, the UI component 722 is configured to generate an insight element and push the insight element to the user device, such as described with respect to step 218 in **FIG. 2****.** As another example, the UI component 722 is configured to generate an insight screen and send the insight screen to the user device based on the output of the LLM component 720 for the user device to display, such as described with respect to steps 220-224 in **FIG. 2****.** In some embodiments, the UI component 722 is further configured to utilize UI data stored in UI database 724, for example, UI data relating to UI responses, including visited UI screens, not visited UI screens, and other available UI data for use by user devices in rendering UI screens.

Note that **FIG. 7** is just one example of a processing system consistent with aspects described herein, and other processing systems having additional, alternative, or fewer components are possible consistent with this disclosure.

Thus, from one perspective, there has now been described an adaptive content management system configured to generate dynamic user interfaces. In certain aspects, methods for adaptive content management include caching user interface data, including user interface responses to user interaction with the user interface, and other user interface data and providing such cached user interface data to a large language model (LLM) to generate a dynamic user interface screen based on a plurality of key-value pairs indicating user interface objects for display on the dynamic user interface screen.

### Example Clauses

Implementation examples are described in the following numbered clauses:
Clause 1: A method for adaptive content management, comprising: caching a plurality of user interface (UI) responses, wherein each UI response indicates one or more UI objects for native display on a UI and is based on a user interaction with the UI; determining a triggering condition is satisfied based on the plurality of UI responses; in response to determining the triggering condition is satisfied, prompting a large language model (LLM) based on the plurality of UI responses; receiving, from the LLM, an output comprising a plurality of key-value pairs, and a priority level associated with each key-value pair of the plurality of key-value pairs, wherein each key-value pair of the plurality of key-value pairs indicates one of the one or more UI objects; and generating a dynamic UI display based on the output, wherein the UI display comprises key focus areas associated with the one or more UI objects for native display on the UI.
Clause 2: The method of clause 1, further comprising prompting a user based on receiving the output from the LLM.
Clause 3: The method of clause 2, further comprising: receiving, from the user, a request for the UI display after the prompting of the user; and providing, to the UI, the UI display for presentation to the user.
Clause 4: The method of any one of clauses 1-3, wherein prompting the LLM based on the plurality of UI responses, further comprises instructing the LLM to generate the output.
Clause 5: The method of any one of clauses 1-4, wherein prompting the LLM based on the plurality of UI responses, further comprises a plurality of UI objects associated with one or more additional UI screens.
Clause 6: The method of any one of clauses 1-5, wherein the triggering condition comprises a threshold number of tokens to comprise a prompt for the LLM.
Clause 7: The method of any one of clauses 1-6, wherein the triggering condition comprises a navigation pattern within the UI responses.
Clause 8: The method of any one of clauses 1-7, wherein the triggering condition comprises a user attribute associated with the user interaction.
Clause 9: The method of any one of clauses 1-8, wherein the triggering condition comprises a time of day.
Clause 10: The method of any one of clauses 1-9, wherein the triggering condition comprises an indication the user visited a plurality of frequently visited screens.
Clause 11: The method of any one of clauses 1-10, wherein the output comprises a curated map of the key-value pairs based on the priority level.
Clause 12: The method of any one of clauses 1-11, wherein the priority level is based on a property of one or more UI objects for native display on the UI.
Clause 13: The method of any one of clauses 1-12, wherein the priority level is based on a heat map associated with the UI display.
Clause 14: A method for adaptive content management, comprising: obtaining a plurality of user interface (UI) objects for native display on a plurality of UI screens; determining a triggering condition is satisfied based on the plurality of UI objects; in response to determining the triggering condition is satisfied, prompting a large language model (LLM) based on the plurality of UI objects; receiving, from the LLM, an output comprising a plurality of key-value pairs, and a priority level associated with each key-value pair of the plurality of key-value pairs, wherein each key-value pair of the plurality of key-value pairs indicates one of the plurality of UI objects; and generating a dynamic UI display based on the output, wherein the UI display comprises key focus areas associated with the plurality of UI objects for native display on the UI.
Clause 15: The method of any one of clauses 14-15, further comprising prompting a user based on receiving the output from the LLM.
Clause 16: The method of clause 15, further comprising: receiving, from the user, a request for the UI display after the prompting of the user; and providing, to the UI, the UI display for presentation to the user.
Clause 17: The method of any one of clauses 14-16, wherein prompting the LLM based on the plurality of UI objects, further comprises instructing the LLM to generate the output.
Clause 18: The method of any one of clauses 14-17, wherein the triggering condition comprises at least one of: a threshold number of tokens to comprise a prompt for the LLM; a navigation pattern associated with the plurality of UI objects; a user attribute associated with a user interaction with one of the plurality of UI objects; a time of day; or an indication a user visited a plurality of frequently visited screens.
Clause 19: The method of any one of clauses 14-18, wherein the output comprises a curated map of the key-value pairs based on the priority level.
Clause 20: A processing system, comprising: a memory comprising computer-executable instructions; and a processor configured to execute the computer-executable instructions and cause the processing system to perform a method in accordance with any one of Clauses 1-19.
Clause 21: A processing system, comprising means for performing a method in accordance with any one of Clauses 1-19.
Clause 22: A non-transitory computer-readable medium storing program code for causing a processing system to perform the steps of any one of Clauses 1-19.
Clause 23: A computer program product embodied on a computer-readable storage medium comprising code for performing a method in accordance with any one of Clauses 1-19.

### Additional Considerations

The preceding description is provided to enable any person skilled in the art to practice the various embodiments described herein. The examples discussed herein are not limiting of the scope, applicability, or embodiments set forth in the claims. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

Further examples of feature combinations taught by the present disclosure are set out in the following numbered further clauses:
1. A method for adaptive content management, comprising:
   caching a plurality of user interface (UI) responses, wherein each UI response indicates one or more UI objects for native display on a UI and is based on a user interaction with the UI;
   determining a triggering condition is satisfied based on the plurality of UI responses;
   in response to determining the triggering condition is satisfied, prompting a large language model (LLM) based on the plurality of UI responses;
   receiving, from the LLM, an output comprising a plurality of key-value pairs, and a priority level associated with each key-value pair of the plurality of key-value pairs, wherein each key-value pair of the plurality of key-value pairs indicates one of the one or more UI objects; and
   generating a dynamic UI display based on the output, wherein the UI display comprises key focus areas associated with the one or more UI objects for native display on the UI.
2. The method of clause 1, further comprising prompting a user based on receiving the output from the LLM.
3. The method of clause 2, further comprising:
   receiving, from the user, a request for the UI display after the prompting of the user; and
   providing, to the UI, the UI display for presentation to the user.
4. The method of any preceding clause, wherein prompting the LLM based on the plurality of UI responses, further comprises instructing the LLM to generate the output.
5. The method of any preceding clause, wherein prompting the LLM based on the plurality of UI responses, further comprises a plurality of UI objects associated with one or more additional UI screens.
6. The method of any preceding clause, wherein the triggering condition comprises a threshold number of tokens to comprise a prompt for the LLM.
7. The method of any preceding clause, wherein the triggering condition comprises a navigation pattern within the UI responses.
8. The method of any preceding clause, wherein the triggering condition comprises a user attribute associated with the user interaction.
9. The method of any preceding clause, wherein the triggering condition comprises a time of day.
10. The method of any preceding clause, wherein the triggering condition comprises an indication the user visited a plurality of frequently visited screens.
11. The method of any preceding clause, wherein the output comprises a curated map of the key-value pairs based on the priority level.
12. The method of any preceding clause, wherein the priority level is based on a property of one or more UI objects for native display on the UI.
13. The method of any preceding clause, wherein the priority level is based on a heat map associated with the UI display.
14. A method for adaptive content management, comprising:
   obtaining a plurality of user interface (UI) objects for native display on a plurality of UI screens;
   determining a triggering condition is satisfied based on the plurality of UI objects;
   in response to determining the triggering condition is satisfied, prompting a large language model (LLM) based on the plurality of UI objects;
   receiving, from the LLM, an output comprising a plurality of key-value pairs, and a priority level associated with each key-value pair of the plurality of key-value pairs, wherein each key-value pair of the plurality of key-value pairs indicates one of the plurality of UI objects; and
   generating a dynamic UI display based on the output, wherein the UI display comprises key focus areas associated with the plurality of UI objects for native display on the UI.
15. The method of clause 14, further comprising prompting a user based on receiving the output from the LLM.
16. The method of clause 15, further comprising:
   receiving, from the user, a request for the UI display after the prompting of the user; and
   providing, to the UI, the UI display for presentation to the user.
17. The method of any of clauses 14 to 16, wherein prompting the LLM based on the plurality of UI objects, further comprises instructing the LLM to generate the output.
18. The method of any of clauses 14 to 17, wherein the triggering condition comprises at least one of: a threshold number of tokens to comprise a prompt for the LLM; a navigation pattern associated with the plurality of UI objects; a user attribute associated with a user interaction with one of the plurality of UI objects; a time of day; or an indication a user visited a plurality of frequently visited screens.
19. The method of any of clauses 14 to 18, wherein the output comprises a curated map of the key-value pairs based on the priority level.
20. A processing system, comprising: a memory comprising computer-executable instructions; and a processor configured to execute the computer-executable instructions and cause the processing system to:
   cache a plurality of user interface (UI) responses, wherein each UI response indicates one or more UI objects for native display on a UI and is based on a user interaction with the UI;
   determine a triggering condition is satisfied based on the plurality of UI responses;
   in response to determining the triggering condition is satisfied, prompt a large language model (LLM) based on the plurality of UI responses;
   receive, from the LLM, an output comprising a plurality of key-value pairs, and a priority level associated with each key-value pair of the plurality of key-value pairs, wherein each key-value pair of the plurality of key-value pairs indicates one of the one or more UI objects; and
   generate a dynamic UI display based on the output, wherein the UI display comprises key focus areas associated with the one or more UI objects for native display on the UI.

## Claims

1. A method for adaptive content management, comprising:
caching a plurality of user interface (UI) responses, wherein each UI response indicates one or more UI objects for native display on a UI and is based on a user interaction with the UI;
determining a triggering condition is satisfied based on the plurality of UI responses;
in response to determining the triggering condition is satisfied, prompting a large language model (LLM) based on the plurality of UI responses;
receiving, from the LLM, an output comprising a plurality of key-value pairs, and a priority level associated with each key-value pair of the plurality of key-value pairs, wherein each key-value pair of the plurality of key-value pairs indicates one of the one or more UI objects; and
generating a dynamic UI display based on the output, wherein the UI display comprises key focus areas associated with the one or more UI objects for native display on the UI.

2. The method of claim 1, further comprising prompting a user based on receiving the output from the LLM.

3. The method of claim 2, further comprising:
receiving, from the user, a request for the UI display after the prompting of the user; and
providing, to the UI, the UI display for presentation to the user.

4. The method of any preceding claim, wherein prompting the LLM based on the plurality of UI responses, further comprises instructing the LLM to generate the output.

5. The method of any preceding claim, wherein prompting the LLM based on the plurality of UI responses, further comprises a plurality of UI objects associated with one or more additional UI screens.

6. The method of any preceding claim, wherein the triggering condition comprises a threshold number of tokens to comprise a prompt for the LLM.

7. The method of any preceding claim, wherein the triggering condition comprises a navigation pattern within the UI responses.

8. The method of any preceding claim, wherein the triggering condition comprises a user attribute associated with the user interaction.

9. The method of any preceding claim, wherein the triggering condition comprises a time of day.

10. The method of any preceding claim, wherein the triggering condition comprises an indication the user visited a plurality of frequently visited screens.

11. The method of any preceding claim, wherein the output comprises a curated map of the key-value pairs based on the priority level.

12. The method of any preceding claim, wherein the priority level is based on a property of one or more UI objects for native display on the UI.

13. The method of any preceding claim, wherein the priority level is based on a heat map associated with the UI display.

14. A method for adaptive content management, comprising:
obtaining a plurality of user interface (UI) objects for native display on a plurality of UI screens;
determining a triggering condition is satisfied based on the plurality of UI objects;
in response to determining the triggering condition is satisfied, prompting a large language model (LLM) based on the plurality of UI objects;
receiving, from the LLM, an output comprising a plurality of key-value pairs, and a priority level associated with each key-value pair of the plurality of key-value pairs, wherein each key-value pair of the plurality of key-value pairs indicates one of the plurality of UI objects; and
generating a dynamic UI display based on the output, wherein the UI display comprises key focus areas associated with the plurality of UI objects for native display on the UI.

15. A processing system, comprising: a memory comprising computer-executable instructions; and a processor configured to execute the computer-executable instructions and cause the processing system to:
cache a plurality of user interface (UI) responses, wherein each UI response indicates one or more UI objects for native display on a UI and is based on a user interaction with the UI;
determine a triggering condition is satisfied based on the plurality of UI responses;
in response to determining the triggering condition is satisfied, prompt a large language model (LLM) based on the plurality of UI responses;
receive, from the LLM, an output comprising a plurality of key-value pairs, and a priority level associated with each key-value pair of the plurality of key-value pairs, wherein each key-value pair of the plurality of key-value pairs indicates one of the one or more UI objects; and
generate a dynamic UI display based on the output, wherein the UI display comprises key focus areas associated with the one or more UI objects for native display on the UI.
